**Europäisches Patentamt**

**European Patent Office**

**Office européen des brevets**

(19)

(11) Veröffentlichungsnummer : **0 171 678**
**B1**

(12) **EUROPÄISCHE PATENTSCHRIFT**

(45) Veröffentlichungstag der Patentschrift :
28.09.88

(51) Int. Cl.⁴ : **H 04 M   1/50**

(21) Anmeldenummer : **85109323.7**

(22) Anmeldetag : **25.07.85**

(54) Anordnung zum Erzeugen eines Mehrfrequenzsignals.

(30) Priorität : **03.08.84 DE 3428767**

(43) Veröffentlichungstag der Anmeldung :
**19.02.86 Patentblatt 86/08**

(45) Bekanntmachung des Hinweises auf die Patenterteilung : **28.09.88 Patentblatt 88/39**

(84) Benannte Vertragsstaaten :
**AT DE FR GB IT NL SE**

(56) Entgegenhaltungen :
**WO-A-82 /041 68**
**FR-A- 2 513 040**
**US-A- 3 838 414**
**ELECTRONIC   COMPONENTS   &   APPLICATIONS,**
**Band 1, Nr. 1, Oktober 1978, Seiten 29-41, Eindhoven,**
**NL; J.J.A. GEBOERS et al.: "Two-tone telephone**
**dialling"**

(73) Patentinhaber : **Siemens Aktiengesellschaft Berlin**
**und München**
**Wittelsbacherplatz 2**
**D-8000 München 2 (DE)**

(72) Erfinder : **Bardl, Artur, Dipl.-Ing.**
**Agnes-Bernauer-Strasse 26**
**D-8000 München 21 (DE)**
Erfinder : **Lindner, Manfred, Dipl.-Phys.**
**Römerweg 8**
**D-8025 Unterhaching (DE)**

**Beschreibung**

Die Erfindung betrifft eine Anordnung zum Erzeugen eines Mehrfrequenzsignals, wie es im Oberbegriff des Patentanspruchs 1 beschrieben ist.

In der Fernsprechvermittlungstechnik wird das Mehrfrequenzverfahren dazu verwendet, die in einem Teilnehmerendgerät erzeugte Wahlinformation aufzubereiten. Dabei werden in Abhängigkeit von Reihen- und Spaltensignalen des Tastenfeldes mehrere Sinuswellen generiert und anschließend aufsummiert.

Ein bekanntes Verfahren besteht darin, zwei Digital-Analog-Wandler aufzubauen, wobei jeder eine der beiden erforderlichen Frequenzen erzeugt. Die Schaltungen müssen ferner die beiden Frequenzen mit unterschiedlichem Pegel mischen und das Summensignal für die Signalisierung bereitstellen. In einer Buchveröffentlichung von Eugene R. Hnatek mit dem Titel « User's Guidebook to Digital CMOS Integrated Circuits », 1981, Mc Graw-Hill, Seite 185, ist ein dafür geeigneter Schaltkreis zum Einsatz in einem Fernsprechgerät beschrieben. Er weist einen Referenzoszillator auf, dessen Ausgangssignal unter Steuerung des Wahltastenfeldes zwei parallelen Sinuswellenzählern zugeführt wird. Diese erzeugen zwei Pulsströme, mit welchen zwei D/A-Wandler angesteuert werden. Deren Ausgangssignale werden in einem Operationsverstärker zusammengefaßt, an dessen Ausgang das Mehrfrequenzsignal abgreifbar ist.

Ferner ist aus S. 173 bis 176 eine Anordnung bekannt, bei welcher die von der Tastenmatrix abgeleiteten Signale zwei Teilern zugeführt sind, welche einen D/A-Wandler ansteuern und welche die Wichtungsverhältnisse für eine obere und eine untere Frequenzgruppe bestimmen. Die beiden erzeugten Sinuswellen werden addiert und sind dann an einem Ausgangstreiber abgreifbar.

Der Erfindung lag die Aufgabe zugrunde, eine Anordnung der o. g. Art anzugeben, mit welcher die Frequenzerzeugung, die Bereitstellung von unterschiedlichen Pegeln und das Mischen auf einfache Weise durchgeführt wird. Diese Aufgabe wird gemäß dem kennzeichnenden Teil des Anspruchs 1 gelöst. Weiterbildungen der Erfindung ergeben sich aus den Unteransprüchen.

Die Erfindung ermöglicht die Synthese von mehreren Frequenzen mit unterschiedlichen Pegeln mit nur einem D/A-Wandler. Die Anordnung zeichnet sich durch eine hohe reproduzierbare Genauigkeit der Pegel aus, da der selbe Wandler für die verschiedenen Frequenzen benutzt wird. Die Treppenspannungen werden ebenfalls nur von einer einzigen geschalteten als D/A-Wandler dienenden Kondensatoranordnung erzeugt. Die unterschiedlichen Amplituden für die einzelnen Frequenzen entstehen durch kapazitive Spannungsteilung zwischen dem D/A-Wandler und unterschiedlich großen Teiler-Kondensatoren, die als Abtast- und Halteschaltungen ausgeführt sind und im Wandelzeitpunkt, wenn ein Analogwert für die zugehörige Frequenz erzeugt wird, angeschaltet sind. Auf diesen Kondensatoren wird die analoge Treppenfunktion, die im Amplitudenwert bereits den endgültigen Wert aufweist, gespeichert.

Im folgenden wird die Erfindung anhand eines Ausführungsbeispieles weiter beschrieben.

Fig. 1 zeigt ein Blockschaltbild der Erfindung,
Fig. 2 zeigt Einzelheiten der Fig. 1,
Fig. 3 und 4 zeigen Kurvenformen im Zusammenhang mit der Anordnung nach Fig. 1 bzw. 2.

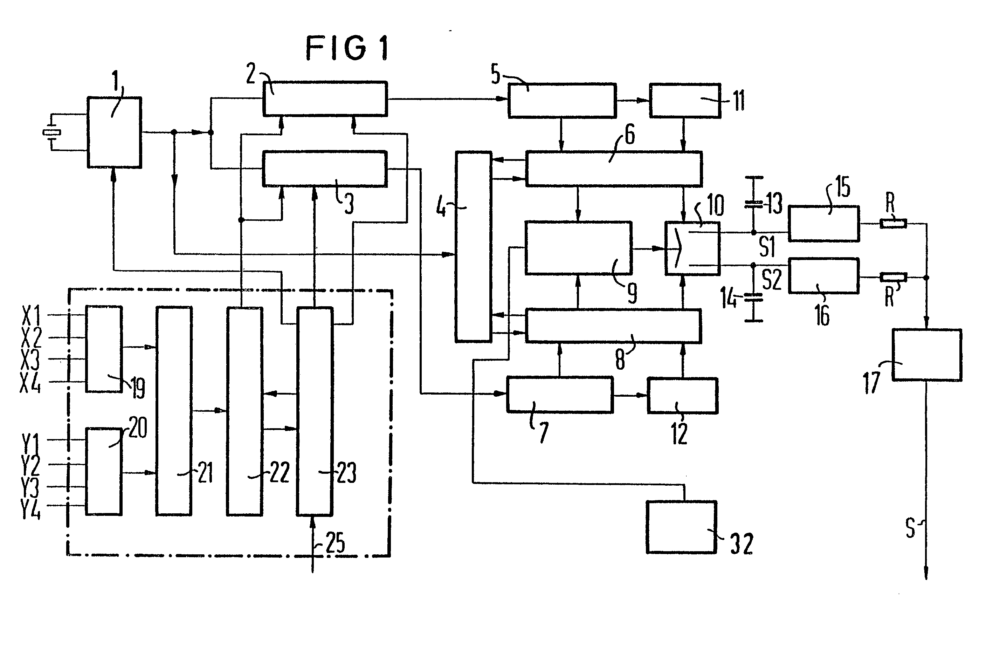

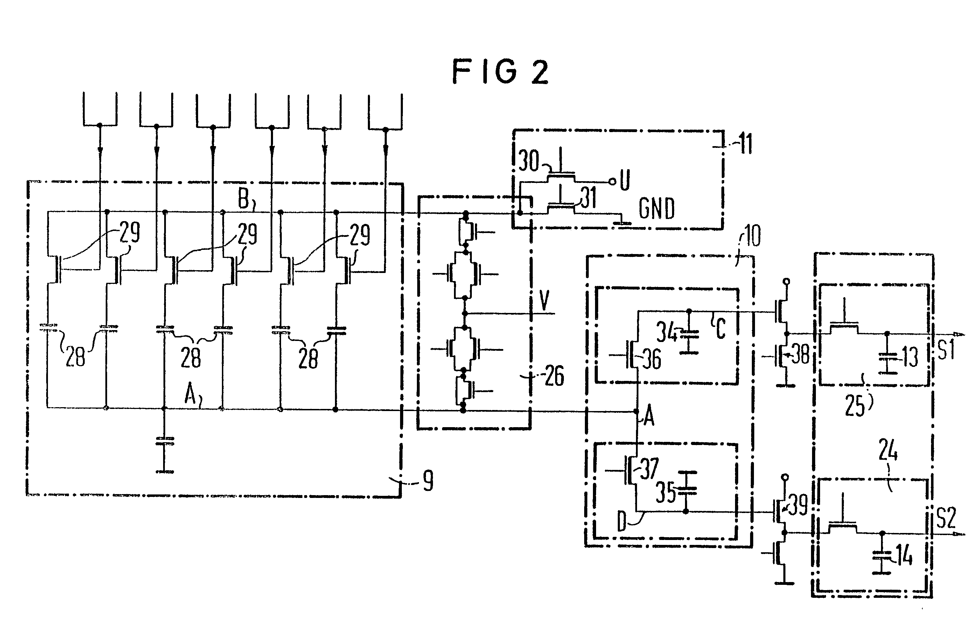

Die in den Figuren 1, 2 beispielhaft wiedergegebene Anordnung dient zur Erzeugung einer oberen und einer unteren Frequenzgruppe mit jeweils vier unterschiedlichen Frequenzen. Ausgehend von einem Referenzoszillator 1 wird über einen ersten Teiler 2 für die obere Frequenzgruppe und einen zweiten Teiler 3 für die untere Frequenzgruppe jeweils ein Vorwärts-Rückwärtszähler 5,7 (Kurvenformzähler) angesteuert. Diese wiederum sind ausgangsseitig mit einer Vorzeichenumschaltung 11 bzw. 12 und jeweils einer D/A-Wandleranschaltung 6 bzw. 8 verbunden. Zwischen den beiden Anschaltungen 6, 8 liegt ein von Referenzspannungsquellen 32 versorgter, sinusgewichteter kapazitiver D/A-Wandler 9 und eine von diesem beaufschlagte Abtast- und Halteschaltung 10 mit jeweils einem Ausgang für die obere und untere Frequenzgruppe, die über einen Tiefpaß 15 bzw. 16 auf einen Ausgangstreiber 17 geführt sind. Die A/D-Wandlung wird von einer Ablaufsteuerung 4 gesteuert. Die beiden Teiler 2, 3 werden über einen Informationsspeicher 22 und eine Ausleseablaufsteuerung 23 programmiert, die wiederum über eine Tastenerkennung 19, 20 und eine Dekodermatrix 21 ansteuerbar sind. Der ersten Tastenerkennung 19 sind die von einer Tastatur des Teilnehmerendgeräts stammenden Zeilenleitungen X1 bis X4 und der zweiten Tastenerkennung 20 die zugehörigen Spaltenleitungen Y1 bis Y4 zugeführt.

Im folgenden wird die Funktion dieser Anordnung beschrieben. Über die Leitung 25 wird die Gabelfunktion der Fernsprecheinrichtung überwacht. Sobald darauf die Inbetriebnahme angezeigt wird, wird über die Auslese-Ablaufsteuerung 23 der Oszillator 1 zur Versorgung der beiden Teiler 2, 3 der D/A-Wandlersteuerung 4 und der Tastenerkennung gestartet. Über die beiden Tastenerkennungen 19, 20 wird festgestellt, ob die Tastatur betätigt wurde. Ist dies der Fall, so werden die der betreffenden Taste zugeordneten X- und Y-Signale an die Dekodermatrix 21 weitergeleitet. Diese steuert den Informationsspeicher 22 an, in welchem unter der zugehörigen Adresse die der Taste zugeordnete Tasten-Information abgespeichert ist. Durch eine Dekodierung werden daraus die Teilerverhältnisse abgeleitet. Von der Ausleseablaufsteuerung 23 werden daraufhin die beiden Teiler 2, 3 programmiert und gestartet.

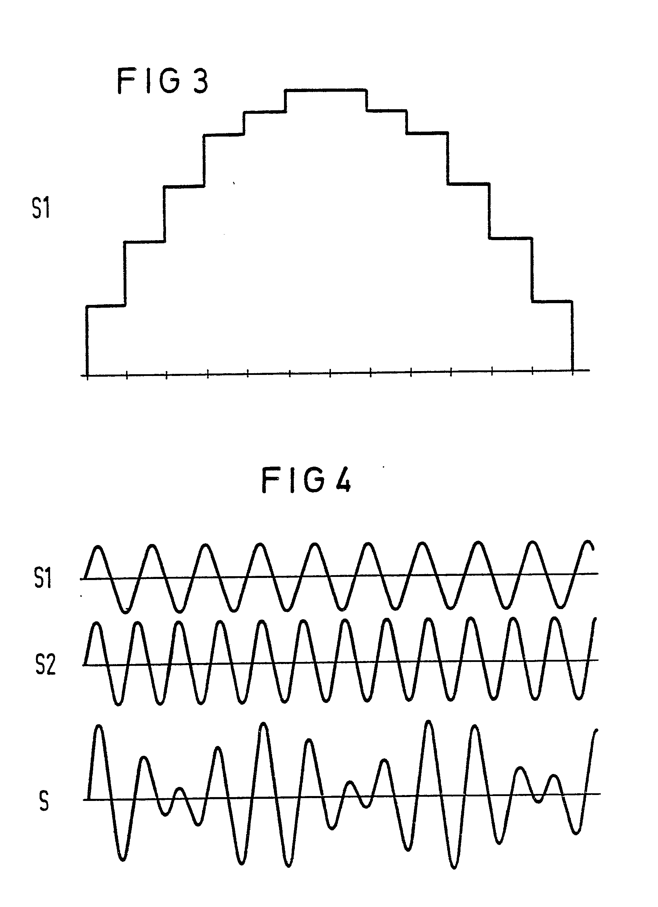

Die eigentliche A/D-Wandlung beruht darauf, eine Kurvenform mit einem treppenartigen Verlauf zu erzeugen. Dabei wird die Breite der Stufen vom zugehörigen Teiler 2 bzw. 3 und die Höhe der Stufen vom zugehörigen Vorwärts-Rückwärtszähler 5 bzw. 7 bestimmt. In dem wiedergegebenen Beispiel ist ferner eine Viertelfaltung der Sinustreppenfunktion realisiert. Dieses Prinzip ist zusammen mit den Fig. 2 und 3 beschrieben.

Die Wandlerablaufsteuerung 4 überprüft anhand der den D/A-Wandleranschaltungen 6,8 zugeführten Steuersignalen, ob und ggf. wann eine gleichzeitige Wandlung für die obere Frequenzgruppe und die untere Frequenzgruppe durchzuführen ist und koordiniert die Anschaltung an den D/A-Wandler 9. Die D/A-Wandleranschaltungen 6,8 erfüllen dabei eine Multiplexerfunktion für den D/A-Wandler 9. Wegen der Mehrfachnutzung des D/A-Wandlers 9 bei benötigter gleichzeitiger Wandlung entsteht ein zeitlicher Fehler, da die Wandlung nicht zeitgerecht erfolgen kann. Dieser Fehler wird durch unterschiedlich lange Speicherzeiten zwischen der Wandlung und der Signalweitergabe im Abtast- und Halteglied 10 von den Teilerkondensatoren 34, 35 an die Haltekondensatoren 13, 14 angeglichen. Der wahre Zeitbezug ist aus den digitalen Zählern 5 und 7 pro erzeugter Frequenz ableitbar. Zur gleichzeitigen Synthese beispielsweise zweier Frequenzen sind zwei Zähler erforderlich.

Sowohl das Sinussignal der oberen Frequenzgruppe als auch das Sinussignal der unteren Frequenzgruppe wird zur Ausfilterung von Oberwellen dem ersten bzw. zweiten Tiefpaß 15, 16 zugeführt. Die Mischung der beiden Signale erfolgt in dem nachgeschalteten Ausgangstreiber 17.

Fig. 2 zeigt beispielhaft im einzelnen den sinusgewichteten D/A-Wandler 9, eine nachgeschaltete Rücksetzschaltung 26, die Vorzeichenumschaltung 11, die Abtast- und Halteschaltung 10 und eine Schaltung zum Zeitausgleich 25, 24 in jedem der beiden Zweige.

Zur Erzeugung einer 12-stufigen Amplitudenfunktion (Fig. 3) besteht der D/A-Wandler 9 aus sechs gewichteten Kondensatoren mit jeweils einem Transistor 29 zum Anschalten an zwei Referenzspannungen U, GND, die durch Transistoren 30, 31 in Abhängigkeit vom Vorzeichen der zu erzeugenden Sinushalbwellen angeschaltet werden.

Die Abtast- und Halteschaltung 10 besteht für jede der Frequenzgruppen aus einem Teilerkondensator 34 bzw. 35 und einer Anschaltung (Transistor 36 bzw. 37).

Im folgenden sind die Ablaufphasen der D/A-Wandlung beschrieben. Zu Anfang werden die Knoten A, B, C oder D zurückgesetzt. Gleichzeitig werden die Transistoren 36 bzw. 37 durchgeschaltet. Alle Schalter 29 die in der kommenden Wandelphase benötigt werden sind geschlossen. Nach dem Ende der Rücksetzphase liegen die Knoten A, B, C bzw. D auf Null.

Das erste Viertel einer Sinustreppenfunktion wird dadurch erzeugt, daß der Schalter 30 den Knoten B an die eine Referenzspannungsquelle anschaltet. Der jeweilige Spannungswert am Knoten A wird auf den Kondensatoren 34 bzw. 35 gespeichert. Sobald alle Schalter 29 angeschaltet sind, d. h. wenn der Vorwärts-Rückwärtszähler 5 bzw. 7 seinen Endstand erreicht hat, werden beim Rückzählen die Kondensatoren 28 über die Schalter 29 nacheinander wieder abgeschaltet. Auf diese Weise wird das zweite Viertel der Sinusfunktion erzeugt. Auf entsprechende Weise wird die Sinuswelle bei einer Anschaltung an die zweite Referenzspannungsquelle über Schalter 31 vervollständigt. Die unterschiedlichen Amplituden für die einzelnen Frequenzen entstehen durch die kapazitive Spannungsteilung zwischen den Kondensatoren 28 und 34 bzw. 35.

Die D/A-Wandlung erfolgt jedoch für eine Frequenz bezüglich der Treppenstufen nicht ununterbrochen aufeinanderfolgend, vielmehr wird zwischen den einzelnen Treppenstufen von einer Frequenzgruppe auf die andere Frequenzgruppe umgeschaltet. Wie schon beschrieben, erfolgt dies über die D/A-Wandleranschaltungen 6, 8 für die Schalter 29 und über die Wandlerablaufsteuerung 4 für die Schalter 36, 37.

Die jeweils auf den Teilerkondensatoren 34, 35 gespeicherten Teilspannungen werden über Impedanzwandler 38 bzw. 39 auf die Anordnungen 23 bzw. 24 geschaltet.

Fig. 3 zeigt die positive Halbwelle einer 12-stufigen Amplitudenfunktion S1, wie sie prinzipiell am Ausgang der Anordnungen 23 und 24 abgreifbar ist.

In Fig. 4 sind unter Vernachlässigung der Treppenfunktion die Verläufe zweier Sinuswellen S1, S2 aufgetragen, wie sie beispielsweise an den Ausgängen der Anordnungen 23 und 24 abgreifbar sind. Der Kurvenverlauf darunter zeigt ein durch Mischen der beiden Sinussignale erzeugtes Mehrfrequenzsignal S.

Die Ablaufsteuerung 4 und die Ausleseablaufsteuerung 23 sind beispielsweise als PLA (programmable logical array) ausführbar, deren Aufbau aus der Firmenschrift « PAL-Handbook, third edition », S. 1-4 bis 1-15 ; der Fa. Monolithic Memories Inc. bekannt ist.

## Patentansprüche

1. Anordnung zum Erzeugen eines Mehrfrequenzsignals mit einem Referenzoszillator (1), dessen Ausgangssignal unter Steuerung eines Wahltastenfeldes zwei parallelen Kurvenformzählern (5, 7) zugeführt wird, dadurch gekennzeichnet, daß zwischen den beiden Kurvenformzählern (5, 7) und einem D/A-Wandler (9) jeweils eine von einer D/A-Ablaufsteuerung (4) überwachte D/A-Wandleranschaltung (6, 8) zum Festlegen des jeweiligen Anschaltpunktes liegt, und daß dem D/A-Wandler (9) eine Abtast- und Halteschaltung mit Teilerkondensatoren (34, 35) und Haltekondensatoren (13, 14) nachgeschaltet sind.

2. Anordnung nach Anspruch 1, dadurch gekennzeichnet, daß der D/A-Wandler (9) aus zuschaltbaren Kondensatoren (28) besteht, die mit den Teilerkondensatoren (34, 35) einen Spannungsteiler bilden.

3. Anordnung nach Anspruch 1 oder 2, dadurch gekennzeichnet, daß die Teilerkondensatoren (34, 35) unterschiedliche Kapazitäten aufweisen.

4. Anordnung nach einem der vorhergehenden Ansprüche, dadurch gekennzeichnet, daß die Haltekondensatoren (13, 14) über die D/A-Ablaufsteuerung (4) in Abhängigkeit von den beiden Zählern (5, 7) anschaltbar sind.

**Claims**

1. An arrangement for generating a multi-frequency signal, with a reference oscillator (1) whose output signal is supplied to two parallel curve-form counters (5, 7) under the control of a dialling keyboard, characterised in that, between the two curve-form counters (5, 7) and a D/A-converter (9), there is in each case arranged a D/A-converter connecting circuit (6, 8) which is monitored by a D/A flow control unit (4) which determines the respective connection point, and that the D/A-converter (9) is connected at its output end to a sample-and-hold circuit comprising divider capacitors (34, 35) and holding capacitors (13, 14).

2. An arrangement as claimed in Claim 1, characterised in that the D/A-converter (9) consists of connectible capacitors (28) which form a voltage divider, together with the divider capacitors (34, 35).

3. An arrangement as claimed in Claim 1 or 2, characterised in that the divider capacitors (34, 35) have différent capacitances.

4. An arrangement as claimed in one of the preceding Claims, characterised in that the holding capacitors (13, 14) can be connected via the D/A flow control unit (4) in dependence upon the two counters (5, 7).

**Revendications**

1. Dispositif pour produire un signal à plusieurs fréquences, comprenant un oscillateur de référence (1) dont le signal de sortie est envoyé, sous la commande d'un clavier de touches de sélection, à deux compteurs (5, 7) de formes de courbes parallèles, caractérisé en ce qu'un élément de connexion (6, 8) de convertisseur N/A, servant à fixer chaque fois le point de connexion, est disposé entre chacun des deux compteurs (5, 7) de formes de courbes et un convertisseur N/A (9), avec surveillance de l'élément de connexion (6, 8) par une commande séquentielle (4) de la conversion N/A, et que le convertisseur N/A (9) est suivi par un circuit d'échantillonnage et de maintien avec des condensateurs diviseurs (34, 35) et des condensateurs de maintien (13, 14).

2. Dispositif selon la revendication 1, caractérisé en ce que le convertisseur N/A (9) est composé de condensateurs (28) pouvant être mis en circuit séparément et qui constituent un diviseur de tension avec les condensateurs diviseurs (34, 35).

3. Dispositif selon la revendication 1 ou 2, caractérisé en ce que les condensateurs diviseurs (34, 35) ont des capacités différentes.

4. Dispositif selon une des revendications précédentes, caractérisé en ce que les condensateurs de maintien (13, 14) peuvent être mis en circuit par la commande séquentielle N/A (4) en fonction des deux compteurs (5, 7).

FIG 1

# FIG 2

0 171 678

0 171 678

FIG 3

S1

FIG 4

S1

S2

S

3